Europäisches Patentamt

European Patent Office

Office européen des brevets

(11) Veröffentlichungsnummer: **0 417 476 A1**

# (12) EUROPÄISCHE PATENTANMELDUNG

(21) Anmeldenummer: 90115277.7

(22) Anmeldetag: 09.08.90

(51) Int. Cl.⁵: **B23Q 7/14, B65G 25/08**

(30) Priorität: 12.09.89 DE 3930370

(43) Veröffentlichungstag der Anmeldung:
20.03.91 Patentblatt 91/12

(84) Benannte Vertragsstaaten:
**CH DE ES FR GB IT LI**

(71) Anmelder: **SCHUNK AUTOMATION GMBH**
**Rodheimer Strasse 59**
**W-6301 Heuchelheim(DE)**

(72) Erfinder: **Herkommer, Rudolf**
**Bahnhofstrasse 62**
**W-7052 Schwaikheim(DE)**

(74) Vertreter: **Sparing Röhl Henseler**
**Patentanwälte European Patent Attorneys**
**Rethelstrasse 123**
**W-4000 Düsseldorf 1(DE)**

(54) Schnelleinzugseinrichtung für Werkstückträger.

(57) Die Erfindung betrifft eine Schnelleinzugseinrichtung für Werkstückträger, in die die Werkstückträger (2) nacheinander längs einer geraden Förderstrecke mittels eines Zu- und eines Abführförderers (4) zu- bzw. abführbar und in dieser über einen Schrittförderer in eine Bearbeitungs-oder Montagestation beförderbar sind, wobei der zwischen zwei Endstellungen fördernde Schrittförderer mindestens ein Eingriffsorgan für jeden hiervon gleichzeitig zu fördernden Werkstückträger und einen Antrieb aufweist. Um möglichst kurze Einzugszeiten zu erzielen, ist vorgesehen, daß der Schrittförderer ein von einem reversierbaren Elektromotor (6) antreibbarer Zahnriemen-trieb (7-9) ist, dessen Zahnriemen (9) mit zwei hierdurch linear und parallel zur Förderstrecke bewegbaren Mitnehmern (10) verbunden ist, die jeweils mindestens einen in Richtung auf den jeweiligen Werkstückträger hin- und herbeweglichen, in eine korrespondierende Ausnehmung im Werkstückträger einführbaren Mitnahmezapfen (11) aufweisen, wobei in wenigstens einer Endstellung der Mitnehmer ein die Anwesenheit des Mitnehmers kontrollierender und eine Betätigung der Mitnehmerzapfen auslösender Sensor vorgesehen ist.

Fig. 1

Die Erfindung betrifft eine Schnelleinzugseinrichtung für Werkstückträger, in die die Werkstückträger nacheinander längs einer geraden Förderstrecke mittels eines Zu- und eines Abführförderers zu- bzw. abführbar und in dieser über einen Schrittförderer in eine Bearbeitungs- oder Montagestation beförderbar sind, wobei der zwischen zwei Endstellungen fördernde Schrittförderer mindestens ein Eingriffsorgan für jeden hiervon gleichzeitig zu fördernden Werkstückträger und einen Antrieb aufweist.

Eine derartige Schnelleinzugseinrichtung ist aus der DE-C-3 714 108 bekannt, bei der ein Rechteckförderer verwendet wird, der oberseitig mit Positionierstiften versehen ist, die mit den Werkstückträgern in Eingriff bringbar sind. Die Länge des Rechteckförderers ist derart, daß er jeweils zwei Werkstückträger mit Abstand zueinander aufnehmen kann, wobei er jeweils gleichzeitig einen Werkstückträger in der Bearbeitungsposition und einen in Warteposition anhebt, ersteren in Abgabeposition und letzteren in Bearbeitungsposition befördert und zum Weitertransport bzw. Bearbeiten entsprechend wieder absenkt. Durch weiteres Absenken des Rechteckförderers gelangen dessen Positionierstifte außer Eingriff und der Rechteckförderer kann in seine Ausgangsposition zurückgebracht werden. Die hierbei bewegten Massen sind jedoch relativ groß, wodurch sich entsprechend lange Einzugszeiten ergeben. Außerdem ist die Biegung und damit die Konstruktion kompliziert.

Aufgabe der Erfindung ist es, eine Schnelleinzugseinrichtung der eingangs genannten Art zu schaffen, bei der die bewegten Massen verringert sind, so daß sich kürzere Einzugszeiten ergeben, und deren Konstruktion vereinfacht ist.

Diese Aufgabe wird dadurch gelöst, daß der Schrittförderer ein von einem reversierbaren Elektromotor antreibbarer Zahnriementrieb ist, dessen Zahnriemen mit zwei hierdurch linear und parallel zur Förderstrecke bewegbaren Mitnehmern verbunden ist, die jeweils mindestens einen in Richtung auf den jeweiligen Werkstückträger hin- und herbeweglichen, in eine korrespondierende Ausnehmung im Werkstückträger einführbaren Mitnahmezapfen aufweisen, wobei in wenigstens einer Endstellung der Mitnehmer ein die Anwesenheit des Mitnehmers kontrollierender und eine Betätigung der Mitnehmerzapfen auslösender Sensor vorgesehen ist.

Bei einer derartigen Konstruktion sind nur Mitnehmer linear in Trans portrichtung zusammen mit den Werkstückträgern und den darauf angeordneten Werkstücken zu transportieren. Die Mitnehmer sind zudem in einfacher Weise betätigbar. Außerdem besteht die Möglichkeit, auch von unten an die Werkstücke heranzukommen.

Weitere Ausgestaltungen der Erfindung sind in den Unteransprüchen und in der nachfolgenden Beschreibung enthalten.

Die Erfindung wird nachstehend anhand eines in den beigefügten Abbildungen dargestellten Ausführungsbeispiels näher erläutert.

Fig. 1 zeigt eine schematisierte Draufsicht auf eine Schnelleinzugseinrichtung für Werkstückträger.

Fig. 2 zeigt in Draufsicht einen Ausschnitt der Schnelleinzugseinrichtung von Fig. 1.

Fig. 3 zeigt eine teilweise geschnittene Seitenansicht eines Endes der Schnelleinzugseinrichtung von Fig. 1.

Fig. 4 zeigt ausschnitweise und teilweise im Schnitt eine weitere Ausführungsform.

Fig. 5 zeigt ein Frequenz-Zeit-Diagramm für die Steuerung des Antriebs der Schnelleinzugseinrichtung.

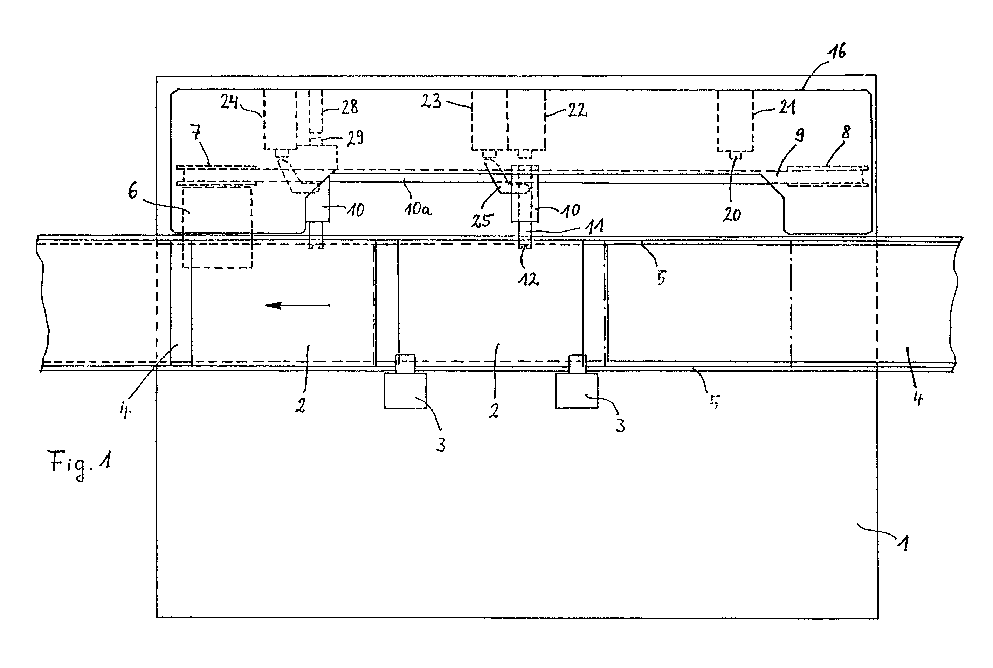

In Fig. 1 ist eine Tischplatte 1 zum Aufbau einer individuellen Montage-und/oder Bearbeitungsstation für zu bearbeitende Werkstücke dargestellt. Die Werkstücke werden mit Hilfe von palettenartigen Werkstückträgern 2 in die Bearbeitungs- bzw. Montageposition befördert und dort mittels Justierund Halteeinrichtungen 3, die auf der Tischplatte 1 angeordnet sind, justiert. Die Werkstückträger 2 werden über Rollen- oder Bandförderer 4 angeliefert und abgeführt. Im Bereich der Tischplatte 1 werden die Werkstückträger 2 entlang von Schienen 5 mittels einer Schnelleinzugseinrichtung aus einer Anlieferposition in die Bearbeitungsposition und aus dieser in die Abführposition befördert.

Die Schnelleinzugseinrichtung umfaßt einen frequenzgesteuerten Antriebsmotor 6, der eine Antriebsrolle 7 für einen um diese und um eine weitere Freilaufrolle 8 geführten Zahnriemen 9 antreibt. Mit dem Obertrum des Zahnriemens 9 sind zwei Mitnehmer 10 fest verbunden, in denen jeweils ein Mitnahmezapfen 11 in Richtung quer zur Transportebene für die Werkstückträger 2 verschiebbar geführt ist. Die beiden Mitnehmer 10 können durch ein Verbindungsstück 10a starr miteinander verbunden sein, während der Zahnriemen 9 mit einem Ende an einem und mit dem anderen Ende am anderen Mitnehmer 10 befestigt ist. Dies erhöht die Positioniergenauigkeit zwischen beiden Mitnehmern 10.

Der Abstand der Mitnahmezapfen 11 entspricht der Länge der Werkstück träger 2 zuzüglich einem vorbestimmten Zwischenraum zwischen zwei aufeinanderfolgenden Werkstückträgern 2. Die Mitnahmezapfen 11 besitzen endseitig eine etwa halbkreisförmige Ausnehmung 12, während die Werkstückträger 2 jeweils an einer vorbestimmten Stelle an der der Schnelleinzugseinrichtung zugewandten Seite eine zum freien Ende des Mitnahmezapfens 11 korrespondierende Ausnehmung aufweisen, in die der Mitnahmezapfen 11 zum Schnelleinzug des jeweiligen Werkstückträgers 2 eingreift. Die zum Eingriff der Mitnahmezapfen 11 bestimmten Ausnehmungen in den Werkstückträgern 2 können in Bezug zu der in der Transportebene liegenden Mittelachse des Werkstückträgers 2 mittig oder versetzt angeordnet sein.

Die Werkstückträger 2, die gewöhnlich aus glasfaserverstärktem Kunststoff bestehen, besitzen ferner unterseitig sich in Transportrichtung erstreckende Leisten 2a aus gehärtetem Stahl, mit denen sie auf den Schienen 5 aufliegen, um große Verschleißfestigkeit und eine genaue Justierung zu erreichen.

Die Mitnehmer 10 sind jeweils mit einer Führungsbuchse 13 verbunden, die längs einer zylindrischen Führungsstange 14 verschiebbar ist und zweckmäßigerweise entsprechende (nicht dargestellte) Lager beinhaltet. Die Führungsstange 14 ist an beiden Enden in entsprechenden Aufnahmestücken 15 gegen Längsverschiebung gesichert, wobei die Aufnahmestücke 15 mit der Rahmenkonstruktion 16 der Schnelleinzugseinrichtung verbunden sind. Außerdem ist die jeweilige Führungsbuchse 13 mit einer Platte 17 verbunden, die eine Rolle 18 trägt, die längs einer mit der Rahmenkonstruktion 16 verbundenen, parallel zur Führungsstange 14 verlaufenden, L-förmigen Schiene 19 läuft. Über die Führungsstange 14 und die Schiene 19 wird die reibungsarme Geradführung der Mitnehmer 10 parallel zur Transportebene und zu den Schienen 5 sichergestellt.

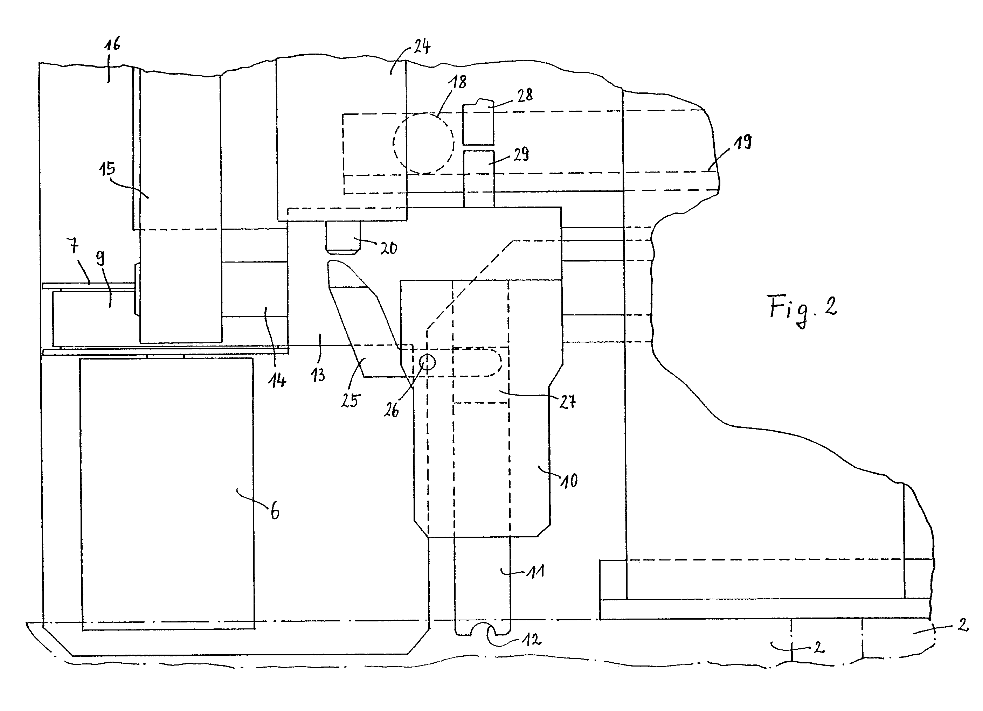

Die Schnelleinzugseinrichtung der Fig. 1 bis 3 umfaßt ferner vier jeweils mit einem Stößel 20 versehene Betätiger 21, 22, 23, 24, deren Stößel 20 insbesondere mittels Druckluft betätigbar sind. Anlieferseitig ist ein Betätiger 21 mit seinem Stößel 20 parallel zur Achse des Mitnahmezapfens 11 eines gerade in Zuführposition befindlichen Mitnehmers 10 vorgesehen. Ein zweiter Betätiger 22 ist mit seinem Stößel 20 parallel zur Achse des Mitnahmezapfens 11 eines gerade in Bearbeitungsposition befindlichen Mitnehmers 10 angeordnet. Der Abstand dieser beiden Betätiger 21, 22 entspricht der Werkstückträgerlänge plus dem zwischen zwei benachbarten Werkstückträgern 2 vorgesehenen Abstand. In Transportrichtung (sh. Pfeil in Fig. 1) hinter dem Betätiger 22 befindet sich neben diesem ein dritter Betätiger 23 und im gleichen Abstand wie zwischen den beiden Betätigern 21, 22 in Transportrichtung dahinter ein vierter Betätiger 24, wobei die Stößel 20 aller Betätiger 21, 22, 23, 24 parallel und in der gleichen Ebene angeordnet sind.

Die beiden Mitnehmer 10 sind jeweils mit einem Rückstellhebel 25 versehen, der hier knieartig ausgebildet und um einen vom Mitnehmer 10 aufgenommenen Zapfen 26 schwenkbar ist. Der eine Arm des Rückstellhebels 25 greift in einen Schlitz 27 des Mitnahmezapfens 11 ein, während sich das Ende des anderen Arms in der Bearbeitungs- und in der Abgabeposition benachbart zum Stößel 20 des Betätigers 23 bzw. 24 befindet.

Außerdem ist in der Abgabeposition ein Näherungsschalter 28 vorgesehen, der durch einen mitnehmerseitigen Zapfen 29 betätigbar ist.

In der Ausgangsposition befinden sich die Mitnehmer 10 benachbart zu den Betätigern 21 und 22, während die Mitnahmezapfen 11 sich in der eingezogenen Position, in der sie nicht mit den Werkstückträgern 2 in Eingriff stehen, befinden. Zum Schnelleinzug eines Werkstückträgers 2 aus der Anlieferposition in die Bearbeitungsposition und zur gleichzeitigen Entfernung eines Werkstückträgers 2 aus der Bearbeitungsposition in die Abgabeposition werden die Mitnahmezapfen 11 der beiden Mitnehmer 10 über die Stößel 20 der Betätiger 21, 22 in die benachbarten Ausnehmungen der Werkstückträger 2 gedrückt. Danach werden die Mitnehmer 10 über den von dem Motor 6 betätigten Zahnriemen 9 um eine Werkstückträgerlänge plus dem zwischen zwei benachbarten Werkstückträgern 2 vorgesehenen Abstand in Transportrichtung verschoben (die hierdurch erreichte Endstellung ist in Fig. 1 dargestellt). Hierdurch gelangen die Rückstellhebel in den Bereich der Stößel 20 der Betätiger 23, 24 und der Zapfen 29 in den Bereich des Näherungsschalters 28. Letzteres löst die Betätigung der Betätiger 23, 24 aus, deren Stößel 20 auf die Rückstellhebel 25 einwirken, die ihrerseits die Mitnahmezapfen 11 aus den Ausnehmungen der Werkstückträger 2 herausziehen. Durch Reversieren der Drehrichtung des Elektromotors 6 werden dann die Mitnehmer 10 in ihre Ausgangsposition zurückgebracht, wobei durch den anschließenden Stillstand des Motors 6 oder das Ende der Bearbeitung in der Bearbeitungsposition das Betätigen der Betätiger 21, 22 auslösbar sein kann.

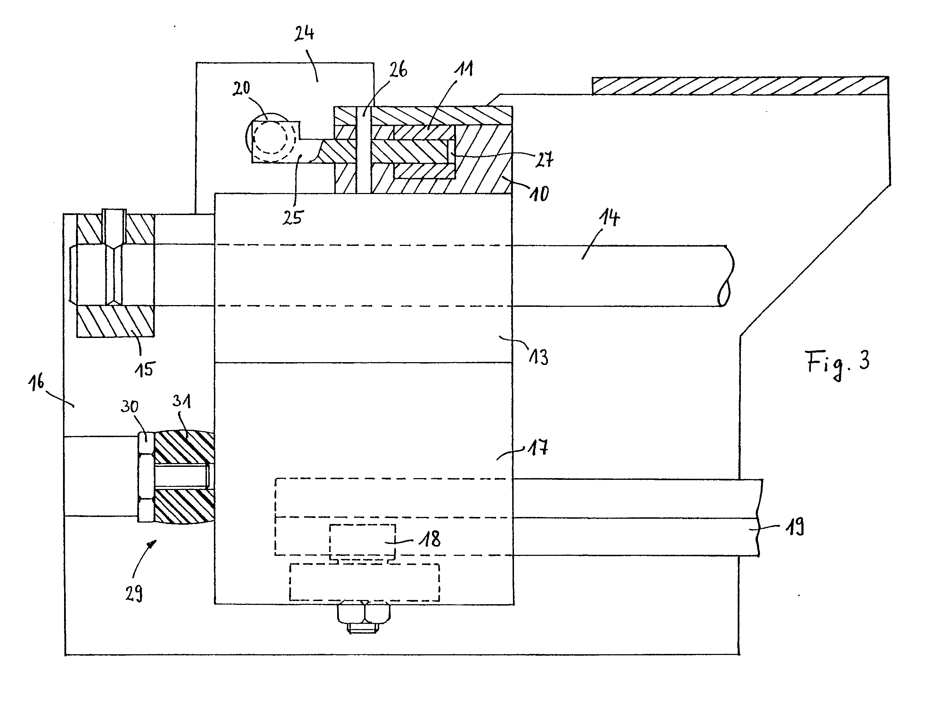

Der frequenzgesteuerte Elektromotor 6 wird mit einer steilen Anstiegsflanke hochgefahren, um einen Schnelleinzug in der Größenordnung von etwa 1 sec oder weniger vorzunehmen. Die Frequenzsteuerung ermöglicht ferner ein weiches Abbremsen am Ende des Einzugs, so daß weich gegen einen entsprechenden Anschlag 29 (vgl. Fig. 3) gefahren werden kann, sh. Fig. 5. Entsprechendes findet bei der Rückführung in die Ausgangsposition statt.

Zweckmäßigerweise wird der Elektromotor 6 nicht bei Erreichen des jeweiligen Anschlags 29 stillgesetzt (Frequenz Null), sondern bleibt mit einer geringen Grundlast bei niedriger Frequenz von beispielsweise etwa 2 Hz weiter in Betrieb, so daß der entsprechende Mitnehmer 10 gegen den jeweiligen Anschlag 29 gedrückt gehalten wird und daher genau positioniert bleibt. Das Reversieren (in Fig. 5 als Wechsel von negativer zu positiver Frequenz oder umgekehrt dargestellt) erfolgt entsprechend, so daß mit einer von Null verschiedenen Anfangsleistung begonnen wird. Zwischen An- und Abstiegsflanke der Frequenz-Zeit-Kurve befindet sich im allgemeinen ein Bereich, in dem mit konstanter Leistung gearbeitet wird, um den Elektromotor 6 nicht zu überlasten.

Die beiden Anschläge 29 können, wie in Fig. 3 dargestellt ist, eine Einstellmutter 30 und ein Pufferelement 31 aus elastischem Material umfassen.

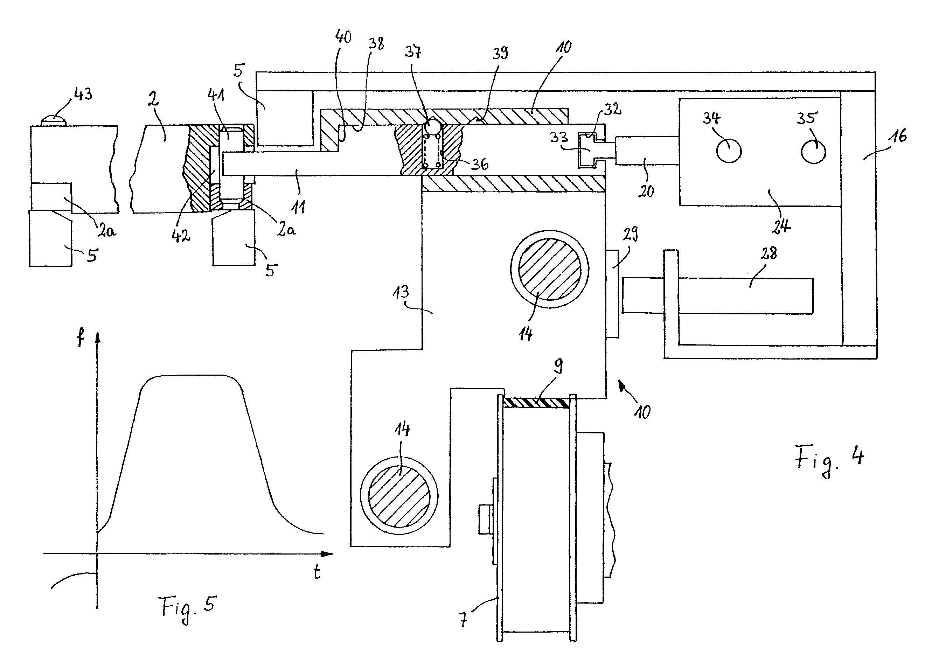

Bei der in Fig. 4 dargestellten Ausführungsform werden die Mitnehmer 10 durch zwei Führungsstangen 14 geführt, die Schiene 19 und die Rolle 18 entfallen damit.

Außerdem kann gemäß Fig. 4 der Mitnahmezapfen 11 rückseitig mit einer sich in Transportrichtung erstreckenden, durchgehenden, hinterschnittenen Nut 32 versehen sein, die einen Kopf 33 am Stößel 20 des jeweiligen Betätigungszylinders 21, 22, 24 aufnehmen kann, die äquidistant zueinander angeordnet sind. Hierdurch kann der zweite Betätigungszylinder 23 in der mittleren Position von Fig. 1 entfallen ebenso wie die Rückstellhebel 25. Das Verstellen des jeweiligen Mitnahmezapfens 11 erfolgt über den Kopf 33 in beiden Richtungen, wobei die Betätigungszylinder 21, 22, 24 beidseitig beaufschlagbare Kolben und entsprechende Druckmittelzuführungen 34, 35 aufweisen.

Ferner können die Mitnahmezapfen 11 jeweils ein Bohrung 36 aufweisen, die eine federbeaufschlagte Kugel 37 aufnimmt, während in der Führung 38 des Mitnehmers 10 für den Mitnahmezapfen 11 den beiden Stellungen des Mitnahmezapfens 11 entsprechende Rastausnehmungen 39 für die Kugel 37 vorgesehen sind. Auch kann der Ausschiebeweg des Mitnahmezapfens 11 durch einen Anschlag 40 am Mitnehmer 10 begrenzt werden.

Die beiden Endstellungen des jeweiligen Stößels 20 lassen sich durch entsprechende Sensoren feststellen, um den Bewegungsablauf zu kontrollieren.

Wie in Fig. 4 dargestellt ist, kommt die Ausnehmung 12 des Mitnahmezapfens 11 mit einem in den Werkstückträger 2 eingesetzten Zapfen 41 in Eingriff, um dessen Mittelteil herum eine Ausnehmung 42 zum Einführen des Mitnahmezapfenendes vorgesehen ist. Die Schiene 5 ist hierbei an der Seite der Schnell einzugseinrichtung zweiteilig, eine obere Schiene 5 an der Rahmenkonstruktion 16 und eine untere Schiene 5, auf der die Stahlleiste 2a gleitet. An der der Schnelleinzugseinrichtung abgewandten Seite besitzt der Werkstückträger 2 oberseitig Zentrier- und Haltevorsprünge 43 mit kugelsegmentförmiger Oberseite, die in der Bearbeitungsposition mit von oben hierauf einwirkenden Klemmbacken der Justier- und Halteeinrichtungen 3 in Eingriff gelangen, die den Werkzeugträger 2 mit seiner Leiste 2a gegen die darunter befindliche Schiene 5 drücken und diesen damit während der Bearbeitung von Werkstücken justieren und halten.

In der Bearbeitungsposition kann sich in der Tischplatte 1 eine Ausnehmung befinden, so daß bei einer oder mehreren Durchtrittsöffnungen in dem Werkstückträger 2 die Werkstücke auch von unten für Bearbeitungs- bzw. Montagevorgänge zugänglich sind. Hierbei ist das dargestellte seitliche Justieren durch die Justiereinrichtungen 3 zweckdienlich.

Statt einer können auch mehrere Bearbeitungsstationen hintereinander vorgesehen sein, dann ist die Zahl der Mitnehmer 10 und der zugehörigen Einrichtungen entsprechend zu vergrößern.

Die Schnelleinzugseinrichtung eignet sich insbesondere für Werkstückträger 2 mit einer Länge über 300 mm, wobei die Einzugszeit im übrigen vom zu fördernden Gewicht abhängt.

Die Schnelleinzugseinrichtung läßt sich als modularer Baustein zum Aufbau von Montage-Transfersystemen gestalten, und zwar in linearer Ausführung, in Karree-Ausführung sowie als Handarbeitsplatzmodul ebenfalls in linearer oder Karree-Ausführung. Durch entsprechend gewähltes konstantes Rastermaß wird dabei volle Austauschbarkeit gewährleistet.

## Ansprüche

1. Schnelleinzugseinrichtung für Werkstückträger (2), in die die Werkstückträger (2) nacheinander längs einer geraden Förderstrecke mittels eines Zu- und eines Abführförderers (4) zu- bzw. abführbar und in dieser über einen Schrittförderer in eine Bearbeitungs- oder Montagestation beförderbar sind, wobei der zwischen zwei Endstellungen fördernde Schrittförderer mindestens ein Eingriffsorgan (11) für jeden hiervon gleichzeitig zu fördernden Werkstückträger (2) und einen Antrieb (6) aufweist, dadurch **gekennzeichnet,** daß der Schrittförderer ein von einem reversierbaren Elektromotor (6) antreibbarer Zahnriementrieb (7, 8, 9) ist, dessen Zahnriemen (9) mit zwei hierdurch linear und parallel zur Förderstrecke bewegbaren Mitnehmern (10) verbunden ist, die jeweils mindestens einen in Richtung auf den jeweiligen Werkstückträger (2) hin- und herbeweglichen, in eine korrespondierende Ausnehmung im Werkstückträger (2) einführbaren Mitnahmezapfen (11) aufweisen, wobei in wenigstens einer Endstellung der Mitnehmer (10) ein die Anwesenheit des Mitnehmers (10) kontrollierender und eine Betätigung der Mitnehmerzapfen (11) auslösender Sensor (28) vorgesehen ist.

2. Schnelleinzugseinrichtung nach Anspruch 1, dadurch gekennzeichnet, daß der Elektromotor (6) eine Steuerung aufweist, so daß er frequenzabhängig mit steiler Anstiegsflanke und weich auslaufender Abstiegsflanke arbeitet.

3. Schnelleinzugseinrichtung nach Anspruch 1 oder 2, dadurch gekennzeichnet, daß der Elektromotor (6) eine Steuerung aufweist, so daß er immer mindestens mit einer geringen Grundlast betrieben wird.

4. Schnelleinzugseinrichtung nach einem der Ansprüche 1 bis 3, dadurch gekennzeichnet, daß die Mitnehmer (10) reibungsarm längs einer Geradführung geführt sind.

5. Schnelleinzugseinrichtung nach Anspruch 4, dadurch gekennzeichnet, daß die Geradführung mindestens eine parallel zur Förderrichtung verlaufende Führungsstange (14) umfaßt.

6. Schnelleinzugseinrichtung nach Anspruch 5, dadurch gekennzeichnet, daß die Mitnehmer (10) Führungsbuchsen (13), die insbesondere Lager beinhalten und die die Führungsstange (14) umgreifen, aufweisen.

7. Schnelleinzugseinrichtung nach einem der Ansprüche 4 bis 6, dadurch gekennzeichnet, daß jeder Mitnehmer (10) wenigstens eine Führungsrolle (18) aufweist, die längs einer parallel zur Transportrichtung verlaufenden Schiene (19) laufen.

8. Schnelleinzugseinrichtung nach einem der Ansprüche 1 bis 7, dadurch gekennzeichnet, daß Schienen (5) zur Führung der Werkstückträger (2) in Förderrichtung vorgesehen sind.

9. Schnelleinzugseinrichtung nach einem der Ansprüche 1 bis 8, dadurch gekennzeichnet, daß eine Tischplatte (1) vorgesehen ist, auf der Justier- und Halteeinrichtungen (3) zum Justieren und Halten des in Bearbeitungsposition befindlichen Werkstückträgers (2) angeordnet sind.

10. Schnelleinzugseinrichtung nach Anspruch 9, dadurch gekennzeichnet, daß die Justiereinrichtungen (3) von oben an den Werkstückträgern (2) auf der den Mitnahmestößeln (11) gegenüberliegenden Seite angreifen.

11. Schnelleinzugseinrichtung nach Anspruch 9 oder 10, dadurch gekennzeichnet, daß die Tischplatte (1) in der Bearbeitungsposition eine Ausnehmung aufweist, so daß die Werkstücke auch von unten zugänglich sind.

12. Schnelleinzugseinrichtung nach einem der Ansprüche 1 bis 11, dadurch gekennzeichnet, daß die Mitnahmezapfen (11) über Betätiger (21, 22, 23, 24) in den Mitnehmern (10) verschiebbar sind.

13. Schnelleinzugseinrichtung nach einem der Ansprüche 1 bis 12, dadurch gekennzeichnet, daß die Mitnehmerzapfen (11) an Stößel (20) von Betätigern (21, 22, 24) ankoppelbar sind.

14. Schnelleinzugseinrichtung nach Anspruch 13, dadurch gekennzeichnet, daß die Mitnahmezapfen (11) eine sich in Transportrichtung erstreckende, durchgehende, hinterschnittene Nut (32) zur Aufnahme eines Kopfes (33) des Stößels (20) aufweisen.

15. Schnelleinzugseinrichtung nach einem der Ansprüche 12 bis 14, dadurch gekennzeichnet, daß zwischen Mitnehmer (10) und Mitnahmezapfen (11) eine zwei Positionen des Mitnahmezapfens (11) definierende Rasteinrichtung (36, 37, 39) vorgesehen ist.

16. Schnelleinzugseinrichtung nach einem der Ansprüche 1 bis 12 oder 15, dadurch gekennzeichnet, daß die Mitnehmer (10) einen an dem Mitnahmezapfen (11) angreifenden Rückstellhebel (27) aufweisen, der über einen Betätiger (23, 24) betätigbar ist.

17. Schnelleinzugseinrichtung nach einem der Ansprüche 12 bis 16, dadurch gekennzeichnet, daß die Mitnahmezapfen (11) direkt über die Betätiger (21, 22, 24) ausschiebbar sind.

18. Schnelleinzugseinrichtung nach einem der Ansprüche 12 bis 17, dadurch gekennzeichnet, daß die Betätiger (21, 22, 23, 24) pneumatisch betätigbare Stößel (20) aufweisen.

19. Schnelleinzugseinrichtung nach einem der Ansprüche 12 bis 18, dadurch gekennzeichnet, daß die Betätiger (21, 22, 23, 24) Betätigungszylinder mit beidseitig beaufschlagbaren Kolben aufweisen.

20. Schnelleinzugseinrichtung nach einem der Ansprüche 1 bis 19, dadurch gekennzeichnet, daß der Sensor (28) in der Abführposition angeordnet ist und das Zurückziehen der Mitnahmezapfen (11) auslöst.

21. Schnelleinzugseinrichtung nach einem der Ansprüche 1 bis 20, dadurch gekennzeichnet, daß der Sensor (28) ein Näherungsschalter ist.

22. Schnelleinzugseinrichtung nach einem der Ansprüche 1 bis 21, dadurch gekennzeichnet, daß die Mitnehmer (10) starr miteinander verbunden sind.

Fig. 1

EP 0 417 476 A1

Fig. 2

EP 0 417 476 A1

Fig.3

EP 0 417 476 A1

Fig. 4

Fig. 5

Europäisches
Patentamt

**EUROPÄISCHER RECHERCHENBERICHT**

Nummer der Anmeldung

EP 90 11 5277

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-A-3147784 (AUDI NSU AUTO UNION) <br> * das ganze Dokument * | 1, 4, 5, 7-9, 12, 18, 22 | B23Q7/14 <br> B65G25/08 |
| | --- | | |
| A | FR-A-2543468 (LA TELEMECANIQUE ELECTRIQUE) <br> * Seite 7, Zeilen 3 - 8; Figur 3 * | 1, 21 | |
| | ----- | | |

**RECHERCHIERTE SACHGEBIETE (Int. Cl.5 )**

B23Q
B65G

Der vorliegende Recherchenbericht wurde für alle Patentansprüche erstellt

| Recherchenort | Abschlußdatum der Recherche | Prüfer |
|---|---|---|
| BERLIN | 11 DEZEMBER 1990 | SIMON, J |